# FASCICULE DE BREVET EUROPEEN

(11) **EP 4 110 666 B1**
(45) Date de publication et mention de la délivrance du brevet: **02.07.2025**
(21) Numéro de dépôt: 21706334.6
(22) Date de dépôt: 24.02.2021
(51) Int. Cl.: B60T 17/22, F16D 65/00

(54) **IDENTIFICATION DE FILTRE DANS UN SYSTÈME DE CAPTATION DE PARTICULES DE FREINAGE ET PROCÉDÉ D'IDENTIFICATION D'UN FILTRE DANS UN SYSTÈME DE FREINAGE À FRICTION**
FILTERIDENTIFIZIERUNG IN EINEM SYSTEM ZUM ERFASSEN VON BREMSPARTIKELN UND VERFAHREN ZUR IDENTIFIZIERUNG EINES FILTERS IN EINER REIBUNGSBREMSANLAGE
FILTER IDENTIFICATION IN A SYSTEM FOR CAPTURING BRAKING PARTICLES AND METHOD FOR IDENTIFYING A FILTER IN A FRICTION BRAKING SYSTEM

(30) Priorité: 28.02.2020 FR 2002024
(43) Date de publication de la demande: 04.01.2023
(73) Titulaire: Tallano Technologies, 75015 Paris (FR)
(72) Inventeur: ADAMCZAK, Loïc, 92100 BOULOGNE BILLANCOURT (FR); ROCCA-SERRA, Christophe, 75016 PARIS (FR)
(74) Mandataire: Plasseraud IP
(86) Numéro de dépôt international: PCT/EP2021/054607
(87) Numéro de publication internationale: WO 2021/170679

(56) Documents cités:
- FR-A1- 3 057 040
- GB-A- 2 538 735
- JP-A- 2001 286 717
- KR-A- 20050 069 079
- KR-A- 20170 026 869

## Description

La présente invention concerne un système de captation des particules de freinage d'un système de freinage à friction, qui comporte une source de dépression, un circuit pneumatique qui relie le système de freinage à friction à la source de dépression, et un filtre actuel situé sur le circuit pneumatique et monté sur un support. FR3057040A1 décrit un ensemble de frein à captation de particules.

De tels systèmes de freinage à friction peuvent équiper des véhicules routiers ou ferroviaires. De tels systèmes de freinage à friction peuvent aussi équiper des machines stationnaires à rotor comme des éoliennes ou des machines industrielles.

Dans de tels systèmes il est prévu une source de dépression (par exemple une turbine d'aspiration entrainée par un moteur) qui est reliée par un circuit pneumatique au système de freinage à friction, et un filtre de collecte des particules qui sont émises par le système de freinage. Ce filtre est placé en amont de la source de dépression, et empêche un passage des particules au travers de la source de dépression et leur diffusion dans l'atmosphère. Cependant, dans certaines situations, le filtre actuel (c'est-à-dire le filtre actuellement monté dans le système) ne présente pas les mêmes caractéristiques (par exemple il est d'un modèle ou d'une marque différente) que le filtre de référence, qui est le filtre adapté pour le système de captation. Cette différence dans au moins une des caractéristiques est préjudiciable car le filtre actuel est susceptible de ne pas fonctionner de façon aussi efficace que le filtre de référence. Le filtre actuel est alors inadapté.

### Description de l'invention

La présente invention vise à remédier à ces inconvénients.

L'invention vise à proposer un système de captation de particules de freinage qui permette de s'assurer que le filtre actuel est identique au filtre de référence.

Ce but est atteint grâce au fait que le système de captation comporte une unité de commande et un dispositif d'identification du filtre qui est apte à envoyer un signal à l'unité de commande, le signal comportant au moins une caractéristique actuelle du filtre actuel, l'unité de commande étant apte à comparer la au moins caractéristique actuelle avec au moins une caractéristique de référence d'un filtre de référence, et à informer un utilisateur lorsque la au moins une caractéristique actuelle et ladite au moins une caractéristique de référence sont dissimilaires.

Grâce à ces dispositions, le filtre actuel est identifié de façon certaine, et sa ou ses caractéristiques pertinentes sont comparées avec celles un filtre de référence, qui est le filtre qui doit être installé dans le système de captation. En conséquence, lorsqu'au moins une de ces caractéristiques du filtre actuellement installé dans le système de captation n'est pas identique à celle du filtre de référence, l'utilisateur en est informé. L'utilisateur peut alors agir pour éviter que le véhicule ou la machine stationnaire continue à fonctionner avec un filtre inadapté. Cette action de l'utilisateur est normalement le remplacement de ce filtre inadapté par un filtre adapté identique au filtre de référence.

Par exemple, la caractéristique actuelle du filtre actuel est unique et la caractéristique de référence du filtre de référence est unique

Avantageusement une portion du dispositif d'identification contient la au moins une caractéristique actuelle du filtre actuel, cette portion étant portée par le filtre actuel.

Ainsi, la fiabilité de l'identification du filtre actuel est renforcée.

L'invention concerne également un procédé d'identification d'un filtre dans un système de captation des particules de freinage d'un système de freinage à friction, ce système de captation comportant une source de dépression, un circuit pneumatique qui relie le système de freinage à friction à la source de dépression, un filtre actuel qui est situé sur le circuit pneumatique et qui est monté sur un support.

Selon l'invention, le procédé comporte les étapes suivantes :
(a) On fournit une unité de commande et un dispositif d'identification du filtre actuel qui font partie du système de captation ;
(b) Le dispositif d'identification envoie au moins un signal à l'unité de commande, ce signal comportant au moins une caractéristique actuelle du filtre actuel ;
(c) L'unité de commande compare la au moins une caractéristique actuelle avec au moins une caractéristique de référence d'un filtre de référence, et informe un utilisateur lorsque la au moins une caractéristique actuelle et la au moins une caractéristique de référence sont dissimilaires.

L'invention sera bien comprise et ses avantages apparaîtront mieux, à la lecture de la description détaillée qui suit, de modes de réalisation représentés à titre d'exemples non limitatifs. La description se réfère aux dessins annexés sur lesquels :
[Fig. 1] La figure 1 est une vue schématique d'un système de captation selon l'invention,
[Fig. 2] La figure 2 est une vue en perspective d'un boitier portant un filtre, et mode de réalisation d'un dispositif de détection de ce filtre dans le système de captation de la figure 1,
[Fig. 3] La figure 3 est une vue en perspective d'un boitier portant un filtre, et d'un autre mode de réalisation d'un dispositif de détection de ce filtre dans le système de captation de la figure 1.

### Description détaillée de l'invention

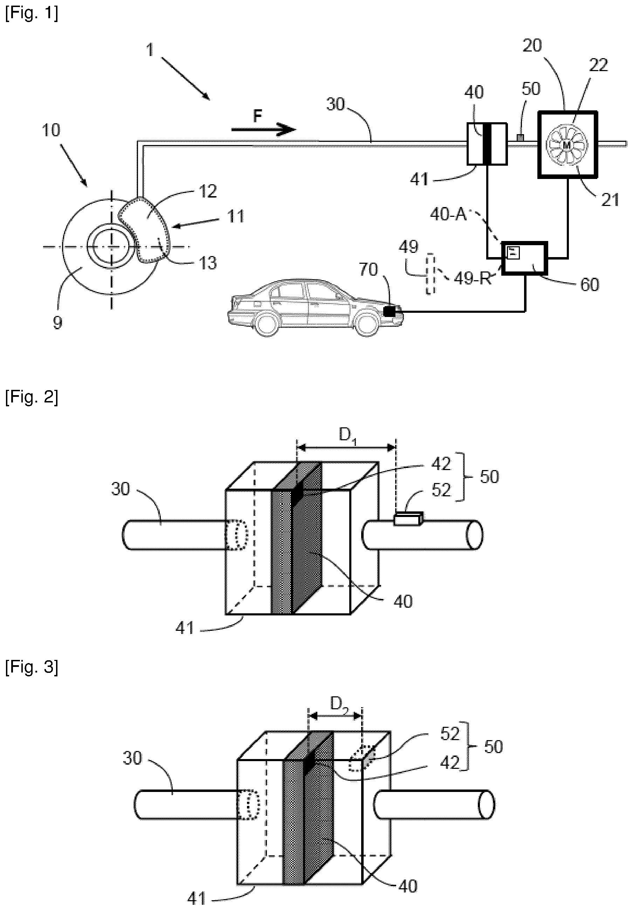

La figure 1 montre schématiquement un système de captation 1 de particules selon l'invention, ces particules étant émises par un système de freinage à friction 10.

Ce système de freinage à friction 10 comporte une plaquette de frein 11 pour le freinage d'un véhicule. Cette plaquette 11 comprend une semelle 12 et une garniture 13 réalisée en matériau de friction fixée sur la semelle 12. Sur la figure 1, la plaquette 10 est vue par-dessous, la semelle 1 étant au premier plan.

La plaquette 11 (première plaquette) est en regard d'un disque 9 qui est entrainé par la roue du véhicule. Une seconde plaquette (non-visible) identique est située de l'autre côté du disque 9 et en regard de la première plaquette 11 de telle sorte que ces deux plaquettes prennent en sandwich le disque 9. Le freinage du disque 9 est réalisé par friction des deux garnitures (13) contre le disque 9 lorsque ces deux plaquettes se rapprochent du disque 9.

Le système de captation 1 comprend un circuit pneumatique 30 et une source de dépression 20. La plaquette 11 et la seconde plaquette sont reliées à la source de dépression 20 via ce circuit pneumatique 30. Par exemple la source de dépression 20 comporte un moteur électrique 21 et une turbine d'aspiration 22 qui est entrainée par ce moteur électrique 21.

En fonctionnement la source de dépression 20 est apte à aspirer les particules depuis leur émission par les garnitures (13) et au travers du circuit pneumatique 30. Le sens de circulation de l'air et des particules est indiqué par la flèche F sur la figure 1. Le système de captation 1 comprend en outre un filtre 40 qui est situé sur le circuit 30, c'est-à-dire qu'il est traversé par l'air qui circule dans le circuit 30. Ce filtre 40 est monté sur un support 41. Par exemple le support 41 est un boitier dans lequel est logé le filtre 40, comme représenté sur les figures. Ainsi le filtre 40 sépare le boitier 41 en une partie amont et une partie aval. L'air provenant de la partie amont du circuit 30 entre dans le boitier 41 à l'extrémité amont du boitier 41, traverse le filtre 40, et sort du boitier 41 à l'extrémité aval du boitier 41 pour entrer dans la partie aval du circuit 30. On appelle « filtre actuel » le filtre 40 qui est effectivement monté sur le support 41 durant le fonctionnement de la source de dépression 20.

Le système de captation 1 comporte en outre une unité de commande 60 et un dispositif de détection 50 du filtre 40. L'unité de commande 60 reçoit des signaux du dispositif de détection 50 (qui comporte un élément pour générer et envoyer ces signaux), et est également apte à commander la source de dépression 20 et en recevoir des informations. Ces interactions entre l'unité de commande 60, le dispositif de détection 50, et la source de dépression 20 sont représentés schématiquement sur la figure 1 par des lignes continues. Ces interactions peuvent être réalisées par des lignes électriques. Le fonctionnement de cette unité de commande 60 et de ce dispositif de détection 50 est décrit ci-dessous.

L'unité de commande 60 et le dispositif d'identification 50 permettent de déterminer si le filtre 40 actuel est identique ou différent d'un filtre de référence 49. Le filtre de référence 49 est par exemple le filtre qui a initialement été installé sur le véhicule ou la machine stationnaire. Il est alors appelé filtre initial. Ce filtre de référence 49 est représenté schématiquement en pointillés sur la figure 1. Ce filtre est ainsi un filtre d'un certain type et/ou d'une certaine marque, et qui possède un certain nombre de caractéristiques 49-R. Le filtre actuel possède un certain nombre de caractéristiques 40-A.Par « caractéristique », on entend par exemple une valeur caractéristique d'une mesure prise sur ce filtre. Cette valeur peut être une dimension géométrique du filtre, une densité du matériau de filtrage, une efficacité de filtration du filtre, une mesure de la perte de charge au travers du filtre, une étendue de la surface développée du média de filtration, le nombre de couches superposées du média filtrant. Cette caractéristique peut être également une forme du filtre. Par exemple, ces caractéristiques sont celles qui sont attendues du filtre pour un bon fonctionnement du système de captation 1. Ces caractéristiques 40-A et 49-R sont indiquées schématiquement sur la figure 1 comme étant intégrées (reçues et/ou stockées) à l'unité de commande 60.

En fonctionnement du système de captation 1, le dispositif d'identification 50 envoie au moins un signal à l'unité de commande 60. Par « au moins un signal », on entend l'émission soit d'un signal en continu, soit d'un signal à intervalles réguliers, soit d'un signal ponctuel. Ce signal comporte au moins une caractéristique 40-A actuelle du filtre actuel 40. L'unité de commande 60 stocke en mémoire au moins une caractéristique de référence 49-R d'un filtre de référence 49. S'il y a une seule caractéristique 40-A, la caractéristique de référence 49-R est reliée à la caractéristique 40-A de telle sorte que si le filtre actuel 40 et le filtre de référence 49 sont identiques, la caractéristique 40-A est sensiblement égale à la caractéristique de référence 49-R. Par « sensiblement égale », on signifie que la caractéristique se situe dans un intervalle réduit autour de la caractéristique de référence. Par exemple cet intervalle est de +/- 1%, ou +/- 2%, ou +/- 5%, ou +/-10% de la valeur de la caractéristique de référence. S'il y a une pluralité de N caractéristiques 40-A (40-A(1), 40-A(2)... 40-A(N) avec N nombre entier), alors il y a une pluralité de N caractéristiques 49-R (49-R(1), 49-R(2), ... 49-R(N)), et chacune des caractéristiques de référence 49-R(n), avec n entier entre 1 et N, est reliée à la caractéristique 40-A(n) de telle sorte que si le filtre actuel 40 et le filtre de référence 49 sont identiques, la caractéristique 40-A(n) est sensiblement égale à la caractéristique de référence 49-R(n). L'unité de commande 60, à réception du signal comportant la ou les caractéristiques actuelles 40-A, compare cette ou ces caractéristiques avec la ou les caractéristiques 49-R. Ainsi, s'il y a une seule caractéristique 40-A, l'unité de commande 60 compare les caractéristiques 40-A et 49-R. S'il y a une pluralité de N caractéristiques 40-A(n), l'unité de commande 60 compare les caractéristiques 40-A (n) et 49-R(n) deux à deux, pour chacun des entiers n entre 1 et N. Si au moins une des caractéristiques actuelles 40-A et des caractéristique de référence 49-R, à l'issue de cette ou ces comparaisons, sont dissimilaires (c'est-à-dire pas sensiblement égales), alors l'unité de commande 60 informe l'utilisateur que le filtre actuel 40 n'est pas un filtre approprié (car il n'est pas identique au filtre de référence 49).

Cette information peut se faire par tout moyen, par exemple par affichage sur le tableau de bord du véhicule d'un texte tel que « Filtre inapproprié », ou d'un logo ou d'un voyant lumineux, et/ou par exemple par stimulation de l'utilisateur par des vibrations au moyen d'un système vibratoire situé dans le siège et commandé par l'unité de commande 60. En complément, cette information peut s'accompagner d'une limitation de la vitesse du véhicule, à l'aide d'un limiteur 70 qui est commandé par l'unité de commande 60 (figure 1). En conséquence la génération de particules lors de freinages est réduite, et la diffusion de ces particules nocives dans la source de dépression 20 est réduite également.

On décrit ci-dessous un mode de réalisation du dispositif d'identification 50 du filtre 40, en référence à la figure 2.

Le dispositif d'identification 50 comporte un détecteur sans contact 52 et un identifiant (cible) 42 qui est porté par le filtre 40. Le détecteur sans contact 52 est apte à détecter l'identifiant 42 dans un certain volume V₀ autour de ce détecteur 54. Cette détection s'effectue par exemple avec la technologie RFID. La technologie RFID regroupe les technologies où l'identifiant est téléalimenté par le détecteur. Le détecteur sans contact 52 est fixé à proximité du filtre 40, c'est-à-dire que l'identifiant 42 se situe dans le volume V₀ autour du détecteur sans contact 54. L'identifiant 42 est spécifique au filtre actuel 40, et comporte en mémoire la ou les caractéristique 40-A du filtre actuel 40.

Le détecteur sans contact 52 est fixé sur le conduit 30 en amont ou en aval du support 41 de telle sorte que le détecteur sans contact 52 se situe à une distance D₁ de l'identifiant 42 lorsque le support 41 portant le filtre 40 est monté sur le conduit 30. Dans ce cas le détecteur sans contact 52 envoie un signal à l'unité de commande 60, ce signal contenant la ou les caractéristiques 40-A du filtre actuel 40. L'unité de commande 60, à réception de ce signal, compare la ou les caractéristiques 40-A avec la ou les caractéristiques 49-R.

Dans un autre mode de réalisation, illustré en figure 3, le détecteur sans contact 52 est fixé sur le support 41 (par exemple il est placé dans le boitier lorsque le support 41 est un boitier), et l'identifiant 42 est porté par le filtre 40, de telle sorte que le détecteur sans contact 54 se situe à une distance D₂ (inférieure à D₁) de l'identifiant 42 lorsque le filtre 40 est monté sur le support 41.

Le dispositif d'identification 50 comporte une portion (par exemple l'identifiant 42) qui contient les caractéristiques 40-A du filtre actuel 40. Lorsque cette portion est portée par ce filtre 40, le système de captation 1 est apte à déterminer si le filtre 40 est distinct du filtre de référence 49 même dans le cas où le support 41 qui est monté sur le conduit 30 est identique à un support portant le filtre de référence 49 mais où un filtre inadapté 40 (donc différent du filtre de référence 49) est monté (par erreur ou volontairement) sur ce support 41. Dans les cas ci-dessus, cette portion est l'identifiant 42.

Dans le cas où c'est le support 41 qui porte la portion du dispositif d'identification 50 qui contient les caractéristiques du filtre destiné à être reçu dans ce support 41 (c'est-à-dire le filtre adapté pour ce support), et où le filtre 40 effectivement monté dans le support 41 est le filtre qui est adapté pour ce support 41, le signal qui est envoyé à l'unité de commande 60 contient les informations correctes du filtre 40 monté dans le support 41. Cependant, un problème se produit lorsque le filtre 40 effectivement monté dans le support 41 (par erreur ou volontairement) n'est pas le filtre adapté pour ce support 41. En effet, dans ce cas le filtre effectivement monté dans le support 41 ne présente pas les caractéristiques du filtre 40 adapté pour ce support 41. Le dispositif d'identification 50 va alors envoyer à l'unité de commande 60 un signal qui contient les caractéristiques du filtre 40 adapté pour ce support 41, alors que le filtre effectivement monté dans ce support 41 ne possède pas ces caractéristiques. Il en résulte un problème puisque le support 41 peut être adapté, mais le filtre 40 effectivement monté sur le support 41 est inadapté et l'utilisateur ne sera pas informé que ce filtre 40 est inadapté. Ce problème est évité lorsque la portion du dispositif d'identification 50 qui contient les caractéristiques 40-A du filtre actuel 40 est portée directement par ce filtre 40. Cela constitue une sécurité supplémentaire.

L'invention concerne également un procédé d'identification d'un filtre 40 dans un système de captation 1 des particules de freinage d'un système de freinage à friction 10. Comme décrit ci-dessus, ce système de captation 1 comporte une source de dépression 20, un circuit pneumatique 30 qui relie le système de freinage à friction 10 à la source de dépression 20, un filtre actuel 40 qui est situé sur le circuit pneumatique 30 et qui est monté sur un support 41. Le procédé comporte les étapes suivantes :
(a) On fournit une unité de commande 60 et un dispositif d'identification 50 du filtre actuel 40 qui font partie du système de captation 1 ;
(b) Le dispositif d'identification 50 envoie au moins un signal à l'unité de commande 60, ce signal comportant au moins une caractéristique actuelle 40-A du filtre actuel 40 ;
(c) L'unité de commande 60 compare la au moins une caractéristique actuelle 40-A avec au moins une caractéristique de référence 49-R d'un filtre de référence 49, et informe un utilisateur lorsque la au moins une caractéristique actuelle 40-A et la au moins une caractéristique de référence 49-R sont dissimilaires.

## Revendications

1. Système de captation (1) des particules de freinage d'un système de freinage à friction (10), qui comporte une source de dépression (20), un circuit pneumatique (30) qui relie ledit système de freinage à friction (10) à ladite source de dépression (20), un filtre actuel (40) situé sur ledit circuit pneumatique (30) et monté sur un support (41), **caractérisé en ce que** ledit système de captation (1) comporte une unité de commande (60) et un dispositif d'identification (50) dudit filtre (40) qui est apte à envoyer au moins un signal à ladite unité de commande (60), ledit signal comportant au moins une caractéristique actuelle (40-A) dudit filtre actuel (40), ladite unité de commande (60) étant apte à comparer ladite au moins une caractéristique actuelle (40-A) avec au moins une caractéristique de référence (49-R) d'un filtre de référence (49), et à informer un utilisateur lorsque ladite au moins une caractéristique actuelle (40-A) et ladite au moins une caractéristique de référence (49-R) sont dissimilaires.

2. Système de captation (1) selon la revendication 1 dans lequel ladite caractéristique actuelle (40-A) du filtre actuel (40) est unique et la caractéristique de référence (49-R) du filtre de référence (49) est unique.

3. Système de captation (1) selon l'une quelconque des revendications 1 à 2 dans lequel une portion (42) dudit dispositif d'identification (50) contient la au moins une caractéristique actuelle (40-A) du filtre actuel (40), cette portion (42) étant portée par ledit filtre actuel (40).

4. Procédé d'identification d'un filtre (40) dans un système de captation (1) des particules de freinage d'un système de freinage à friction (10), ce système de captation (1) comportant une source de dépression (20), un circuit pneumatique (30) qui relie le système de freinage à friction (10) à la source de dépression (20), un filtre actuel (40) qui est situé sur ledit circuit pneumatique (30) et qui est monté sur un support (41), ledit procédé étant **caractérisé en ce qu'**il comporte les étapes suivantes :
(a) On fournit une unité de commande (60) et un dispositif d'identification (50) dudit filtre actuel (40) qui font partie du système de captation (1) ;
(b) Ledit dispositif d'identification (50) envoie au moins un signal à l'unité de commande (60), ce signal comportant au moins une caractéristique actuelle (40-A) dudit filtre actuel (40) ;
(c) Ladite unité de commande (60) compare ladite au moins une caractéristique actuelle (40-A) avec au moins une caractéristique de référence (49-R) d'un filtre de référence (49), et informe un utilisateur lorsque la au moins une caractéristique actuelle (40-A) et la au moins une caractéristique de référence (49-R) sont dissimilaires.

## Patentansprüche

1. Erfassungssystem (1) zum Erfassen von Bremspartikeln einer Reibungsbremsanlage (10), das aufweist: eine Unterdruckquelle (20), eine Pneumatikleitung (30), die die Reibungsbremsanlage (10) mit der Unterdruckquelle (20) verbindet, einen aktuellen Filter (40), der an der Pneumatikleitung (30) angeordnet ist und an einem Träger (41) angebracht ist, **dadurch gekennzeichnet, dass** das Erfassungssystem (1) eine Steuereinheit (60) und eine Identifikationsvorrichtung (50) zum Identifizieren des Filters (40) aufweist, die fähig ist, mindestens ein Signal zu der Steuereinheit (60) zu schicken, wobei das Signal mindestens ein aktuelles Merkmal (40-A) des aktuellen Filters (40) aufweist, wobei die Steuereinheit (60) fähig ist, das mindestens eine aktuelle Merkmal (40-A) mit mindestens einem Referenzmerkmal (49-R) eines Referenzfilters (49) zu vergleichen und einen Nutzer zu informieren, wenn das mindestens eine aktuelle Merkmal (40-A) und das mindestens eine Referenzmerkmal (49-R) unterschiedlich sind.

2. Erfassungssystem (1) nach Anspruch 1, in welchem das aktuelle Merkmal (40-A) des aktuellen Filters (40) einzigartig ist und das Referenzmerkmal (49-R) des Referenzfilters (49) einzigartig ist.

3. Erfassungssystem (1) nach einem der Ansprüche 1 bis 2, in welchem ein Teil (42) der Identifikationsvorrichtung (50) das mindestens eine aktuelle Merkmal (40-A) des aktuellen Filters (40) enthält, wobei dieser Teil (42) von dem aktuellen Filter (40) getragen wird.

4. Verfahren zum Identifizieren eines Filters (40) in einem Erfassungssystem (1) zum Erfassen von Bremspartikeln einer Reibungsbremsanlage (10), wobei dieses Erfassungssystem (1) aufweist: eine Unterdruckquelle (20), eine Pneumatikleitung (30), die die Reibungsbremsanlage (10) mit der Unterdruckquelle (20) verbindet, einen aktuellen Filter (40), der an der Pneumatikleitung (30) angeordnet ist und an einem Träger (41) angebracht ist, wobei das Verfahren **dadurch gekennzeichnet ist, dass** es die folgenden Schritte aufweist, in denen:
(a) eine Steuereinheit (60) und eine Identifikationsvorrichtung (50) zum Identifizieren des aktuellen Filters (40), die Teil des Erfassungssystems (1) sind, bereitgestellt werden;
(b) von der Identifikationsvorrichtung (50) mindestens ein Signal zu der Steuereinheit (60) geschickt wird, wobei dieses Signal mindestens ein aktuelles Merkmal (40-A) des aktuellen Filters (40) aufweist;
(c) die Steuereinheit (60) das mindestens eine aktuelle Merkmal (40-A) mit mindestens einem Referenzmerkmal (49-R) eines Referenzfilters (49) vergleicht und einen Nutzer informiert, wenn das mindestens eine aktuelle Merkmal (40-A) und das mindestens eine Referenzmerkmal (49-R) unterschiedlich sind.

## Claims

1. System for capturing (1) braking particles from a friction brake system (10), which comprises a vacuum source (20), a pneumatic circuit (30) that connects said friction brake system (10) to said vacuum source (20), and a current filter (40) located on said pneumatic circuit (30) and mounted on a support (41), **characterized in that** said capturing system (1) comprises a control unit (60) and an identification device (50) for identifying said filter (40), which is capable of sending at least one signal to said control unit (60), said signal comprising at least one current characteristic (40-A) of said current filter (40), said control unit (60) being capable of comparing said at least one current characteristic (40-A) with at least one reference characteristic (49-R) of a reference filter (49), and informing a user when said at least one current characteristic (40-A) and said at least one reference characteristic (49-R) are dissimilar.

2. Capturing system (1) according to claim 1, wherein said current characteristic (40-A) of the current filter (40) is unique and the reference characteristic (49-R) of the reference filter (49) is unique.

3. Capturing system (1) according to any one of claims 1 or 2, wherein a portion (42) of said identification device (50) contains the at least one current characteristic (40-A) of the current filter (40), this portion (42) being carried by said current filter (40).

4. Method for identifying a filter (40) in a system (1) for capturing braking particles from a friction brake system (10), this capturing system (1) comprising a vacuum source (20), a pneumatic circuit (30) that connects the friction brake system (10) to the vacuum source (20), and a current filter (40) which is located on said pneumatic circuit (30) and which is mounted on a support (41), said method being **characterized in that** it comprises the following steps:
(a) Providing a control unit (60) and an identification device (50) for identifying said current filter (40), as part of the capturing system (1);
(b) Sending, by said identification device (50), at least one signal to the control unit (60), this signal comprising at least one current characteristic (40-A) of said current filter (40);
(c) Comparing, by said control unit (60), said at least one current characteristic (40-A) with at least one reference characteristic (49-R) of a reference filter (49), and informing a user when the at least one current characteristic (40-A) and the at least one reference characteristic (49-R) are dissimilar.
